# EUROPÄISCHE PATENTANMELDUNG

(11) **EP 0 972 597 A2**
(43) Veröffentlichungstag der Anmeldung: **19.01.2000**
(21) Anmeldenummer: 99107289.3
(22) Anmeldetag: 14.04.1999
(51) Int. Cl.: B23B 23/02

(54) **Zentrierspitze zur Verwendung mit einer Drehmaschine**

(30) Priorität: 13.07.1998 DE 29812439 U
(71) Anmelder: Köster, Hermann, 24969 Lindewitt (DE)
(72) Erfinder: Köster, Hermann, 24969 Lindewitt (DE)
(74) Vertreter: Schulz, Rütger, Dr. Dipl.-Phys.

(57) **Zusammenfassung**

Die Erfindung bezieht sich auf eine Hilfsvorrichtung zum Bearbeiten eines Bauteils (1) auf einer Drehbank, das einen über ein Drehlagerelement (3) hinausragenden koaxialen Bearbeitungsabschnitt (1c) aufweist, insbesondere zum Bearbeiten eines Läufers (1) eines Generators für ein Kraftfahrzeug. Die Erfindung ermöglicht die Zentrierung der Hilfsvorrichtung und einen Zugang zur Oberfläche des Bearbeitungsabschnitts (1c). Hierzu ist die Hilfsvorrichtung durch einen Zentrierkörper (5) gebildet, der an seinem einen Ende ein erstes Zentrierelement (5d) aufweist, das eine Aufnahme für das Drehlagerelement (3) besitzt und einen sich an die Aufnahme axial anschließenden Freiraum (9) aufweist, der in radialer Richtung durch ein Bearbeitungsfenster (11) im Zentrierkörper (5) zugänglich ist. Am anderen Ende des Zentrierkörpers (5) ist ein zweites Zentrierelement (5a) angeordnet, das mittelbar oder unmittelbar am Reitstock (6) der Drehbank abstützbar ist.

## Beschreibung

Die Erfindung bezieht sich auf eine Hilfsvorrichtung und ein Verfahren zum Bearbeiten eines Bauteils, das einen über ein Drehlagerelement hinausragenden Bearbeitungsabschnitt aufweist, insbesondere eines Generatorläufers eines Kraftfahrzeugs, auf einer Drehbank.

Bei solchen Bauteilen, die ein Basisteil und einen sich davon über ein Drehlagerelement hinausragenden koaxialen Abschnitt aufweisen, ist ein spanabhebendes Bearbeiten der Mantelfläche des Abschnitts, z. B. durch Abdrehen, Abschleifen oder Abschmirgeln, nicht möglich, da der Abschnitt nicht zentriert werden kann. Eine Zentrierung des Abschnitts ist jedoch erforderlich, um die beim Bearbeiten entstehenden und am Abschnitt wirksamen Bearbeitungskräfte abzustützen.

Diese Schwierigkeit tritt auch bei solchen Generatoren, insbesondere von Kraftfahrzeugen, auf, die einen von einem Basisteil über ein Drehlagerelement hinausragenden koaxialen Abschnitt aufweisen, an dessen Mantelfläche Schleifringe angeordnet sind.

Die Lebensdauer eines Kfz-Generators ist durch die Fahrleistung des zugehörigen Kfzs begrenzt. Bei einem Ausfall des Generators aufgrund Verschleiß an den Schleifringen wird im Regelfall der komplette Generator ersetzt. In Fachwerkstätten bietet sich darüber hinaus noch die Möglichkeit, den kompletten Läufer zu ersetzen.

Es besteht jedoch das Problem einer sofortigen bzw. schnellen Hilfe für den Kunden, da die Werkstätten, selbst Fachwerkstätten, nicht für jedes Kfz den entsprechenden Generator vorrätig haben und insbesondere nicht den entsprechenden Läufer vorrätig haben.

Eine Reparatur des Läufers durch eine spanabhebende Bearbeitung der Mantelfläche des die in Kunststoff eingelassenen Schleifringe aufweisenden Abschnitts bzw. Wellenendes des Läufers ist ausgeschlossen, da es nicht möglich ist, die Läuferwelle zu zentrieren, denn ein Zentrieren der Läuferwelle durch den Einsatz einer bekannten, mitlaufenden Körnerspitze am Reitstock der Drehbank ist nicht möglich, da es an einem zur Körnerspitze passenden Zentrierelement an der Läuferwelle fehlt.

Dieses Problem stellt sich grundsätzlich bei allen solchen Rotationsbauteilen, die einen von einem Basisteil über ein Drehlagerelement hinausragenden koaxialen Abschnitt aufweisen, der an seiner Oberfläche, insbesondere bei seiner Rotation, zu überarbeiten ist, z. B. spanabhebend zu überarbeiten ist.

Der Erfindung liegt die Aufgabe zugrunde, eine Hilfsvorrichtung oder ein Verfahren zu finden, mit der oder mit dem es möglich ist, den vom Basisteil über ein Drehlagerelement hinausragenden koaxialen Abschnitt zu bearbeiten, bzw. einen Generatorläufer eines Kfz-Generators durch vorzugsweise spanabhebendes Bearbeiten des vorgenannten Abschnitts zu reparieren.

Diese Aufgabe wird durch die Merkmale des Anspruchs 1 oder 9 gelöst.

Mit der erfindungsgemäßen Hilfsvorrichtung oder dem erfindungsgemäßen Verfahren ist es möglich, nicht zentrierbare Bauteile auf der Drehbank zu zentrieren und eine Reparatur durch ein Bearbeiten der Oberfläche des Abschnitts durchzuführen, was durch ein entsprechendes Fachpersonal erfolgen kann. Die Hilfsvorrichtung bildet in der erfindungsgemäßen Ausgestaltung eine Innendrehbuchse und ist zum Einsatz auf einer herkömmlichen Drehbank konzipiert.

Bei der erfindungsgemäßen Ausgestaltung läßt sich die Läuferwelle bzw. der zu bearbeitende Abschnitt durch den Zentrierkörper zentrieren, wobei zur Zentrierung der Hilfsvorrichtung am entgegengesetzten Ende ein weiteres Zentrierelement vorgesehen ist, das mittelbar oder unmittelbar am Reitstock der Drehbank abstützbar ist. Dabei kann eine Bearbeitung der Oberfläche des Abschnitts durch das Bearbeitungsfenster in dem eine Innendrehbuchse bildenden Zentrierkörper hindurch erfolgen, was ohne Schwierigkeiten, z. B. mit einem Drehmeißel oder Schleifmittel wie Schleifpapier, möglich ist. Folglich läßt sich ein entsprechend defekter Generator in einfacher Weise und verhältnismäßig schnell zur Beseitigung des Fehlers am Abschnitt der Läuferwelle mit geringem Aufwand und verhältnismäßig schnell reparieren. Ein Warten des Kunden, bis eine Ersatzläuferwelle oder ein Ersatz-Generator geliefert wird, ist nicht erforderlich.

Das Bearbeitungsfenster ermöglicht ein Bearbeiten der Oberfläche des Abschnitts ohne besondere Schwierigkeiten, wobei die Bearbeitung ein Abdrehen, Abschleifen oder auch ein Polieren mit entsprechenden Werkzeugen umfassen kann. In allen Fällen ist ein sauberes und genaues Bearbeiten, insbesondere ein Überdrehen der Schleifringe, während der Einspannung und Rotation der Läuferwelle in der Drehbank gewährleistet.

Hierzu kann ein Drehbank-Futter zum zentrierten Einspannen der Läuferwelle an ihrem dem Abschnitt gegenüberliegenden Ende dienen.

Beim Überarbeiten des Abschnitts ist durch das Einspannen bzw. die Halterung des Zentrierkörpers an dem Reitstock eine Sicherung des Zentrierkörpers gegen Drehen gewährleistet. Dies gilt insbesondere für den Fall, in dem das Drehlagerelement durch ein Wälzlager mit einem Innen- und Außenring gebildet ist, wobei der Außenring durch seinen Kontakt mit dem Zentrierkörper an der Rotation der Außenwelle bei der Bearbeitung nicht teilnimmt.

In den Unteransprüchen sind Merkmale enthalten, die zu einer einfachen und kostengünstig herstellbaren Bauweise für den Zentrierkörper führen, die Zentrierung des Drehlagerelements und somit der Läuferwelle und des Zentrierkörpers selbst gewährleisten bzw. verbessern und außerdem einen freien Zugang zur Oberfläche des Abschnitts zwecks dessen Bearbeitung ohne Schwierigkeiten ermöglichen, so daß ein Bearbeitungswerkzeug in einfacher Weise an die Oberfläche herangeführt und dabei auch visuell beobachtet werden kann.

Nachfolgend werden die Erfindung und weitere durch sie erzielbare Vorteile anhand von bevorzugten Ausgestaltungen und einer Zeichnung näher erläutert. Es zeigen
Fig. 1 eine erfindungsgemäße Hilfsvorrichtung, die in Verbindung mit den wesentlichen Teilen einer Drehbank in der Vorderansicht dargestellt ist;
Fig. 2 die Hilfsvorrichtung als Einzelteil in der Vorderansicht;
Fig. 3 die Hilfsvorrichtung in der Seitenansicht von links;
Fig. 4 die Hilfsvorrichtung nach Fig. 1 in der Unteransicht;
Fig. 5 die Hilfsvorrichtung in der Ansicht gemäß Fig. 4 in abgewandelter Ausgestaltung.

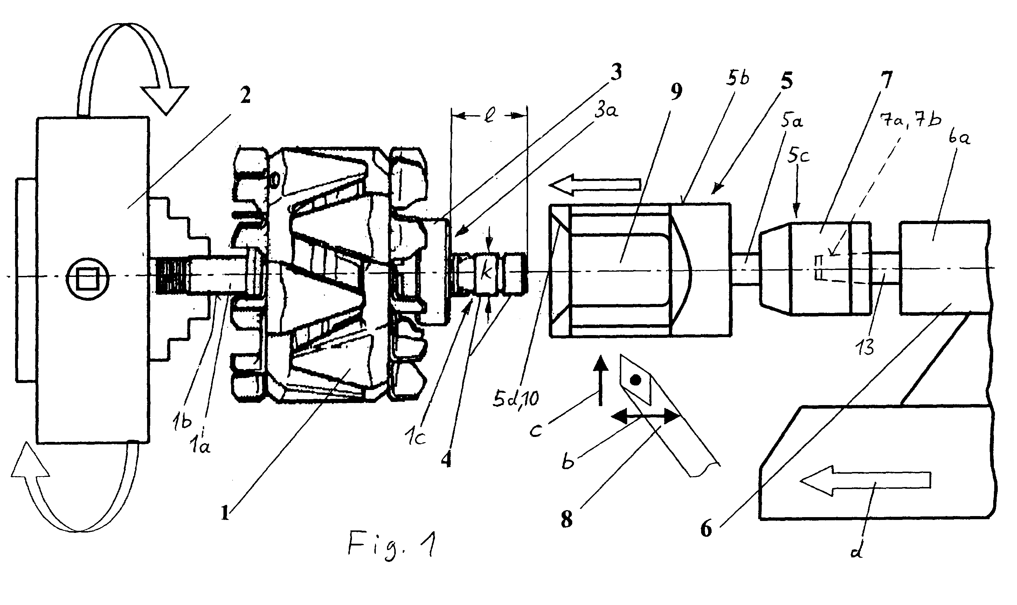

In Fig. 1 ist ein Generator-Läuferkörper 1 mit einer darin koaxial angeordneten Läuferwelle 1a im Spannfutter 2 einer nur teilweise dargestellten Drehbank eingespannt dargestellt. Ein den Läufer 1 an seiner dem Spannfutter 2 zugewandten Seite überragender Läuferwellenabschnitt 1b ist zwischen den Backen des Spannfutters 2 eingespannt und dadurch zentriert und drehfest im Spannfutter 2 aufgenommen. Auf der dem Spannfutter 2 abgewandten Seite des Läuferkörpers 1 ist ein Drehlagerelement 3 auf einem den Läuferkörper 1 auf dieser Seite überragenden Abschnitt der Läuferwelle 1a angeordnet, wobei das Drehlagerelement 3 durch den Außenring eines Wälzlagers gebildet ist, dessen Innenring neben dem Läuferkörper 1 auf der Läuferwelle 1a sitzt. Ein das Drehlagerelement 3 bzw. das Wälzlager 3a koaxial überragender Läuferwellenabschnitt 1c weist übliche Schleifringe 4 auf, die in dem Läuferwellenabschnitt 1c z. B in Kunststoff eingebettet sind und die bearbeitet werden sollen.

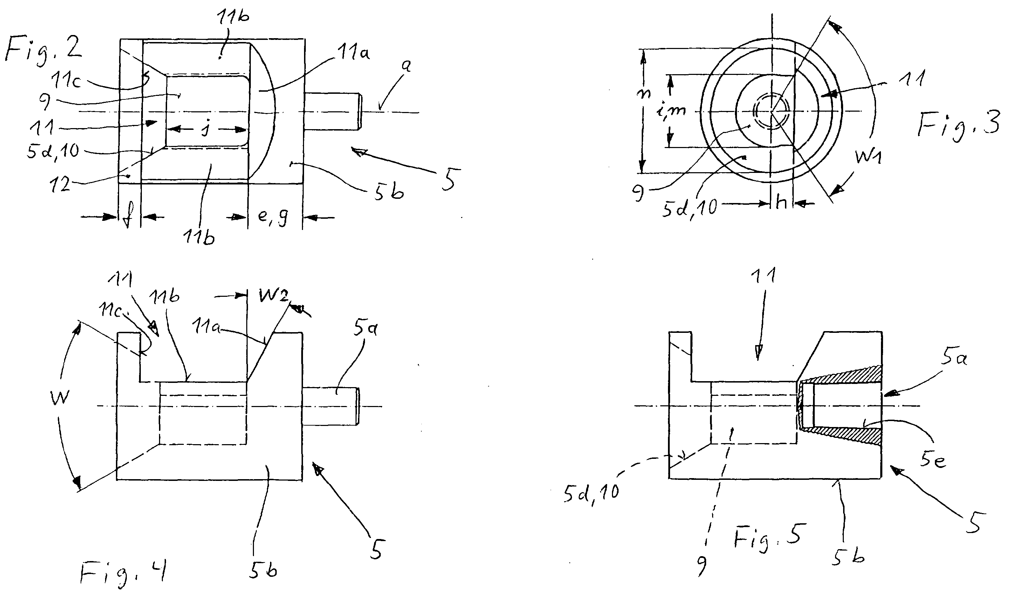

Die Hilfsvorrichtung weist einen Zentrierkörper 5 auf, der durch ein Zentrierelement 5a (nachfolgend als zweites Zentrierelement bezeichnet) an seinem in Fig. 1 rechten Stirnende mittelbar oder unmittelbar am Reitstock 6 der Drehbank abgestützt ist. Hierzu kann ein zweites Spannfutter 7 dienen, das mit einer hohlkegelförmigen Ausnehmung 7a auf einem Bohrfutter-Kegelschaft 7b klemmend sitzt, der vom Reitlagerkopf 6a des Reitlagers 6 längs der Drehachse a der Drehbank in Richtung auf das erste Spannfutter 2 vorragt. Beim Ausführungsbeispiel nach Fig. 1 bis 4 ist das in Fig. 1, 2 und 4 rechtsseitig angeordnete zweite Zentrierelement 5a durch einen zylindrischen Zapfen gebildet, der koaxial von einem Basiskörper 5b des Zentrierkörpers 5 absteht und gemäß Fig. 1 im zweiten Spannfutter 7 aufgenommen und eingespannt ist, wodurch eine allgemein mit 5c bezeichnete Drehsicherungsvorrichtung für den Zentrierkörper 5 gebildet ist.

Mit der Bezugszahl 8 ist ein Drehwerkzeug bzw. Drehmeißel bezeichnet, der an einem nicht dargestellten Drehwerkzeughalter gehalten ist, der längs der Drehachse a und quer dazu in üblicher Weise hin und her verschiebbar gelagen ist, siehe Pfeile b und c. Der Reitstock 6 ist ebenfalls längs der Drehachse a in einer Führung an der Drehbank hin und her verschiebbar gelagen, was durch den Pfeil d verdeutlicht ist.

Der Zentrierkörper 5 weist an seinem in Fig. 1, 2 und 4 linken Ende bzw. Endbereich ein erstes Zentrierelement 5d in Form einer Ausnehmung auf, der das Drehlagerelement 3 in noch zu beschreibender Weise aufzunehmen vermag.

Mit der Bezugszahl 9 ist ein zentraler Freiraum im Zentrierkörper 5 bezeichnet, der am in Fig. 1 linken Ende des Zentrierkörpers 5 ausmündet und in einem Abstand e vor dem rechten Ende des Basiskörpers 5b endet, wobei er sich beim vorliegenden Ausführungsbeispiel über die Längsmitte des Basiskörpers 5b hinaus in diesen hinein erstreckt. Anstelle einer hohlkegelförmigen Zentrierfläche 10 können auch wenigstens drei einander gegenüberliegenden Schrägflächen vorgesehen sein (nicht dargestellt). Das erste Zentrierelement 5d ist beim vorliegenden Ausführungsbeispiel durch eine hohlkegelförmige Zentrierfläche 10 gebildet, deren Kegelwinkel W z. B. etwa 30° bis 120°, insbesondere etwa 60° betragen kann.

An den Freiraum 9 schließt sich radial eine ein Bearbeitungsfenster bildende Fensteröffnung 11 im Basiskörper 5b an, durch die der Freiraum 9 mit dem Drehwerkzeug 8 von außen radial einwärts zugänglich ist. In Umfangsrichtung erstreckt sich die Fensteröffnung 11 vorzugsweise über einen Winkelbereich W1 von etwa 90° bis 180°, wobei der Winkel W1 auch größer oder kleiner bemessen sein kann. Die Fensteröffnung 11 weist von beiden Stirnenden des Basiskörpers 5b jeweils einen Abstand f, g auf, wobei die Abstände e und g gleich groß sein können. Zwecks Verbesserung der Zugänglichkeit durch die Fensteröffnung 11 sind wenigstens die die Fensteröffnung 11 in Fig. 1 rechtsseitig begrenzende Randfläche 11a und die die Fensteröffnung 11b in Umfangsrichtung begrenzenden Randflächen divergent, insbesondere schräg, ausgebildet. Der Winkel W2 kann z. B. 15° bis 60°, insbesondere etwa 30° betragen. Beim vorliegenden Ausführungsbeispiel liegen die die Fensteröffnung 11 in Umfangsrichtung begrenzenden Randflächen 11b in einer zur Achse parallelen Ebene angeordnet. Die die Fensteröffnung in Fig. 1 linksseitig begrenzenden Randfläche 11c verläuft beim vorliegenden Ausführungsbeispiel radial, wodurch Anordnungsraum für die Zentrierfläche 10 geschaffen wird, die sich im verbleibenden Radialsteg 12 zwischen der Fensteröffnung 11 und dem linksseitigen Stirnende des Basiskörpers 5b befindet. Der radiale Abstand h der Randflächen 11b von der Mittelachse des Zentrierkörpers 5 kann etwa an den Radius des Läuferwellenabschnitts 1c angepaßt oder kleiner bemessen sein.

Bei der vorliegenden Ausgestaltung schließt sich der freie Raum 9 an den durch die hohlkegelförmige Zentrierfläche 10 begrenzten Hohlraum im Basiskörper 5b an. Die Querschnittsabmessung i des im Querschnitt vorzugsweise runden bzw. kreisabschnittförmigen Abschnitts 9 und dessen axiale Tiefe j sind größer bemessen als der Durchmesser k des Läuferwellenabschnitts 1c und dessen über das Drehlagerelement 3 axial hinausragende Länge l. Die hohlkegelförmige Zentrierfläche 10 ist in ihrer Querschnittsgröße so groß bemessen, daß ihr kleinster Durchmesser m kleiner ist und ihr größter Durchmesser n größer ist als der Durchmesser k des Läuferwellenabschnitts 1c. Hierdurch ist gewährleistet, daß bei einer koaxialen Bewegung des Zentrierkörpers 5 in Fig. 1 nach links gegen das Drehlagerelement 3 dieses gegen die Zentrierfläche 10 gelangt und daran zentriert wird, wobei zwischen diesen Teilen eine linienförmige Anlage stattfindet. Um den damit verbundenen Flächenpressungen ausreichend Widerstand zu bieten, besteht der Basiskörper 5b aus einem festen Material, insbesondere Metall, z. B. Stahl oder Kunststoff. Das Zentrierelement 5a ist vorzugsweise einteilig am Basiskörper 5b ausgebildet.

Die erfindungsgemäße Hilfsvorrichtung ermöglicht es, den Läuferwellenabschnitt 1c an der Drehbank zu zentrieren, so daß die Oberfläche des Läuferwellenabschnitts 1c während der Rotation bearbeitet bzw. repariert werden kann und somit die Läuferwelle 1a wiederverwendet werden kann.

Nachfolgend werden Verfahrensschritte beschrieben, mit denen ein solcher Reparatur- bzw. Bearbeitungsvorgang durchgeführt werden kann.

Nach dem Einspannen des Läuferkörpers 1 unmittelbar oder mittelbar über den Läuferwellenabschnitt 1b am Spannfutter 2 wird der Zentrierkörper 5 koaxial über den Läuferwellenabschnitt 1c geschoben, bis sein Zentrierelement 5, hier seine Zentrierfläche 10, am Drehlagerelement 3 anstößt, wobei ein axialer Druck gegen das Drehelement 3 aufrecht erhalten werden kann. Das Verbinden bzw. Lagern des Zentrierkörpers 5 mittelbar oder unmittelbar am Reitstock 6, hier sein Einspannen mittels des zweiten Zentrierelements 5a im zweiten Spannfutter 7 des Reitstocks 6, kann vor der vorbeschriebenen Axialverschiebung oder danach erfolgen, so daß bei einer vorherigen Verbindung mit dem Reitstock 6 der Zentrierkörper 5 mit dem Reitstock 6 oder mit der axial verschiebbaren Pinole 13 des Reitstocks gegen das Drehlagerelement 3 verschoben werden kann. Danach kann die Bearbeitung der Oberfläche des Läuferwellenabschnitts 1c nach Einschaltung der Drehbank erfolgen, wozu beim vorliegenden Ausführungsbeispiel das Drehwerkzeug 8 durch die Fensteröffnung 11 gegen den Läuferwellenabschnitt 1c bewegt wird und eine dünne Materialschicht abgedreht wird. Nach dieser Bearbeitung ist die Läuferwelle wieder funktionsfähig. Nach einem Zurückschieben des Zentrierkörpers 5 gleichzeitig mit der Pinole 13 oder mit dem Reitstock insgesamt oder nach einer entsprechenden Verschiebung des Zentrierkörpers 5 allein kann der Läufer 1 entnommen und nach einer gegebenenfalls erforderlichen Reinigung wiederverwendet werden.

Zusammenfassend wird das Ausführungsbeispiel wie folgt beschrieben.

Um ein sauberes, genaues Überdrehen der Schleifringe 4 des Generator-Läufers 1 bei einem Ausfall des Generators zu gewährleisten, wird der Läufer in das Drehmaschinen-Futter 2 eingespannt.

Anschließend wird durch Verstellung des Reitstocks 6 in Richtung des Läufers 1 die im Bohrfutter 7 befindliche, durch den Zentrierkörper 5 gebildete Innendrehbuchse 5 mit dem Innenkegel 10 gegen das Wälzlager 3 gepreßt.

Bei dem Ausführungsbeispiel nach Fig. 5, bei dem gleiche oder vergleichbare Teile mit gleichen Bezugszeichen versehen sind, unterscheidet sich der Zentrierkörper 5 von der vorbeschriebenen Ausgestaltung dadurch, daß er anstelle eines koaxial abstehenden zylindrischen Zapfens eine hohlkegelförmige, nach außen divergente Ausnehmung 5e besitzt. Bei dieser Ausgestaltung kann das so gebildete zweite Zentrierelement 5a ohne ein zweites Spannfutter 7 direkt mit der Pinole 13 drehfest verbunden werden, die an ihrem dem Drehkopf der Drehbank zugewandten Ende einen Spannkegel entsprechender Kegelform aufweist. Es kann sich um einen Bohrfutterkegel gemäß DIN 238 handeln.

## Patentansprüche

1. Hilfsvorrichtung zum Bearbeiten eines Bauteils (1) auf einer Drehbank, das einen über ein Drehlagerelement (3) hinausragenden koaxialen Bearbeitungsabschnitt (1c) aufweist, insbesondere zum Bearbeiten des Läufers (1) eines Generators für ein Kraftfahrzeug, wobei die Hilfsvorrichtung durch einen Zentrierkörper (5) gebildet ist, der an seinem einen Ende ein erstes Zentrierelement (5d) aufweist, das eine Aufnahme für das Drehlagerelement (3) besitzt und einen sich an die Aufnahme axial anschließenden Freiraum (9) aufweist, der in radialer Richtung durch ein Bearbeitungsfenster (11) im Zentrierkörper (5) zugänglich ist, und daß am anderen Ende des Zentrierkörpers (5) ein zweites Zentrierelement (5a) angeordnet ist, das mittelbar oder unmittelbar am Reitstock (6) der Drehbank abstützbar ist.

2. Hilfsvorrichtung nach Anspruch 1,
**dadurch gekennzeichnet,**
daß das erste Zentrierelement (5d) durch wenigstens drei einander gegenüberliegend angeordnete divergente Schrägflächen, insbesondere durch eine hohlkegelförmige Zentrierfläche (10) gebildet ist.

3. Hilfsvorrichtung nach Anspruch 1 oder 2,
**dadurch gekennzeichnet,**
daß das zweite Zentrierelement (5a) durch einen koaxialen zylindrischen Zapfen oder eine hohlkegelförmige, nach außen divergente Ausnehmung (5e) (Fig. 5) gebildet ist.

4. Hilfsvorrichtung nach einem der vorherigen Ansprüche,
**dadurch gekennzeichnet,**
daß das erste Zentrierelement (5d) und das zweite Zentrierelement (5a) an einem Basiskörper (5b) angeordnet sind, der vorzugsweise eine axial prismatische Form und insbesondere eine runde Querschnittsform aufweist.

5. Hilfsvorrichtung nach Anspruch 3 und 4,
**dadurch gekennzeichnet,**
daß der zylindrische Zapfen einteilig am Basiskörper (5b) angeformt ist.

6. Hilfsvorrichtung nach einem der vorherigen Ansprüche,
**dadurch gekennzeichnet,**
daß das Bearbeitungsfenster (11) eine im wesentlichen viereckige oder rechteckige Querschnittsform aufweist.

7. Hilfsvorrichtung nach einem der vorherigen Ansprüche,
**dadurch gekennzeichnet,**
daß wenigstens die dem zweiten Zentrierelement (5a) nahegelegene Randfläche (11a) der Fensteröffnung (11) und/oder eine oder beide der die Fensteröffnung (11) in Umfangsrichtung begrenzenden Randflächen (11b) nach außen divergent verlaufen.

8. Hilfsvorrichtung nach einem der vorherigen Ansprüche,
**dadurch gekennzeichnet,**
daß der Zentrierkörper (5) und/oder der Basiskörper (5b) und/oder der zylindrische Zapfen aus Metall, insbesondere Stahl, oder hartem Kunststoff besteht.

9. Verfahren zum Bearbeiten eines Bauteils (1) auf einer Drehbank, daß einen über ein Drehlagerelement (3) hinausragenden koaxialen Bearbeitungsabschnitt (1c) aufweist, bei dem das Bauteil (1) mit seinem einen Ende koaxial zur Drehachse (a) der Drehbank am Drehkopf (2) der Drehbank befestigt wird, insbesondere zum Bearbeiten des Läufers (1) eines Generators für ein Kraftfahrzeug,
**dadurch gekennzeichnet,**
daß ein Zentrierkörper (5) einer Hilfsvorrichtung nach Anspruch 1 von dem dem befestigten Ende des Bauteils (1) gegenüberliegenden Ende her über einen Bearbeitungsabschnitt (1c) des Bauteils (1) gegen dessen Drehlagerelement (3) geschoben wird und an seinem anderen Ende mittelbar oder unmittelbar am Reitstock (6) der Drehbank abgestützt wird, und daß die Oberfläche des Bearbeitungsabschnitts (1c) mit einem radial einwärts durch das Bearbeitungsfenster (11) hindurch bewegbaren Werkzeug bearbeitet wird.
